**Europäisches Patentamt**

**European Patent Office**

**Office européen des brevets**

(19)

(11) Veröffentlichungsnummer : **0 388 867 B1**

(12)

# EUROPÄISCHE PATENTSCHRIFT

(45) Veröffentlichungstag der Patentschrift :
05.05.93 Patentblatt 93/18

(51) Int. Cl.$^5$ : **B01J 2/16, A01N 25/24**

(21) Anmeldenummer : **90105188.8**

(22) Anmeldetag : **20.03.90**

(54) **Verfahren zur Herstellung von wasserdispergierbaren Granulaten.**

(30) Priorität : **22.03.89 DE 3909455**

(43) Veröffentlichungstag der Anmeldung :
**26.09.90 Patentblatt 90/39**

(45) Bekanntmachung des Hinweises auf die
Patenterteilung :
**05.05.93 Patentblatt 93/18**

(84) Benannte Vertragsstaaten :
**AT BE CH DE DK ES FR GB GR IT LI NL SE**

(56) Entgegenhaltungen :
**GB-A- 2 063 759**

(73) Patentinhaber : **HOECHST
AKTIENGESELLSCHAFT
Postfach 80 03 20
W-6230 Frankfurt am Main 80 (DE)**

(72) Erfinder : **Schlicht, Rainer
Klopstockstrasse 3
W-6277 Bad Camberg (DE)**
Erfinder : **Röchling, Hans, Dr.
Geierfeld 25
W-6232 Bad Soden am Taunus (DE)**
Erfinder : **Albrecht, Konrad, Dr.
Sodener Strasse 64
W-6233 Kelkheim/Taunus (DE)**

Jouve, 18, rue Saint-Denis, 75001 PARIS

## Beschreibung

Gegenstand der vorliegenden Erfindung ist ein Verfahren zur Herstellung von in Wasser dispergierbaren Granulaten, die vorzugsweise im Pflanzenschutz angewendet werden.

Pflanzenschutzmittel kommen hauptsächlich in Form von Spritzpulvern, emulgierbaren Konzentraten oder wässrigen Dispersionen in den Handel. Zur Herstellung von Spritzbrühen werden die Mittel in Wasser eingerührt.

Der Umgang mit diesen Zubereitungsformen ist nicht unproblematisch. So führen Herstellung und Anwendung von Spritzpulver-Formulierungen häufig zur Belästigung durch Staub.

Emulgierbare Konzentrate enthalten Lösungsmittel, die leicht entflammbar, hautreizend oder geruchsbelästigend sein können.

Dispersionen können bei langen Lagerzeiten schwer aufschüttelbare Sedimente bilden. Außerdem bestehen bei diesem Formulierungstyp oft Probleme bezüglich der Entsorgung der Verpackungsmaterialien.

Diese Nachteile haben die in Wasser dispergierbaren Granulate (kurz "WG" genannt) nicht, da sie frei fließend, staubarm und gut dosierbar sind. Sie lassen sich problemlos in Polyethylenbehältern, Klotzbodenbeuteln aus Verbundfolie (Papier/Aluminium/Kunststoff) oder Papptrommeln verpacken, die leicht zu entsorgen sind.

Zur technischen Herstellung von dispergierbaren Granulaten stehen zahlreiche Verfahren zur Verfügung (vgl. H.B. Ries "Granuliertechnik und Granuliergeräte" in Aufbereitungstechnik Nr. 3, 1970, S. 147 und M. Rosch und R. Probst in Verfahrenstechnik $\underline{9}$ (1975) S. 59 bis 64). Insbesondere ist die Herstellung von wasserdispergierbaren Granulaten nach dem Wirbelschichtverfahren bekannt, das im Gegenstrom und im Gleichstrom betrieben werden kann.

Die Patentschriften US-A 3920442 und GB-A 1401304 sowie M. Rosch und R. Probst in Verfahrenstechnik $\underline{9}$ (1975) S. 59 beschreiben das Gegenstrom-Verfahren, bei dem im wesentlichen fein vermahlene Wirkstoffpulver, vermischt mit Inertmaterial und Formulierungshilfsmitteln durch einen von unten eintretenden Luftstrom verwirbelt und mit einer von oben aufgesprühten Kleberlösung agglomeriert werden.

Bei dem Gleichstrom-Verfahren wie es in EP-A 0026918, EP-A-0141436 und EP-A 0141437 sowie bei Verfahrenstechnik $\underline{9}$ (1975), S. 61/62 beschrieben ist, wird eine Produkt-Lösung, -Schmelze oder -Dispersion im Gleichstrom mit der den Feststoff verwirbelnden Luft in den Produktbehälter der Granulier-Apparatur eingesprüht.

Um eine einwandfreie Anwendung zu gewährleisten, müssen wasserdispergierbare Granulate beim Eintragen in Wasser gut benetzt werden, möglichst spontan zerfallen und eine Suspension mit guter Schwebefähigkeit bilden. Bei Granulaten, die nach dem Wirbelschicht-Verfahren hergestellt werden, wird die Benetzbarkeit und das Aufgehen durch verfahrenstechnische Parameter und durch die verwendeten Formulierungsmittel bestimmt.

So erhält man durch Wirbelschichtgranulierung bei passender Formulierungsrezeptur nach dem Gegenstrom-Verfahren gut dispergierbare Granulat-Körner, die außerdem eine ausreichende mechanische Festigkeit aufweisen.

Andererseits ist die Verwendung einer Wirkstoff-Dispersion, die üblicherweise im Gleichstrom-Verfahren eingesetzt wird, als Ausgangsprodukt für ein Granulat kostengünstiger als die Verwendung eines Wirkstoffpulvers, da eine Naßvermahlung technisch einfacher durchzuführen ist als eine Trockenvermahlung.

Wirkstoff-Dispersionen wurden bisher nicht nach dem für die Granulat-Eigenschaften günstigen Wirbelschicht-Gegenstrom-Verfahren zur Herstellung von wasserdispergierbaren Granulaten verwendet. Handelsübliche Wirbelschicht-Granulationsanlagen wie z. B. der Firmen Glatt und Aeromatik arbeiten nach dem Gegenstrom-Verfahren und sind zur Granulierung von fein vermahlenen Pulvermischungen vorgesehen; durch Sprühen einer Kleberlösung in das mit Warmluft fluidisierte Pulver erhält man das gewünschte Granulat. Die Apparate werden in der Chargenfahrweise betrieben (M. Rosch und R. Probst in Verfahrenstechnik $\underline{9}$ (1975), S. 59 oder D. Jones, Introduction to Fluid Bed Granulating, Glatt GmbH, D-7851 Binzen/Lörrach).

Sollen in den beschriebenen Anlagen Granulate aus Wirkstoff-Dispersionen hergestellt werden, so benötigt man bei Prozeßbeginn als Vorlage ein Pulver gleicher Zusammensetzung wie die Trockensubstanz der zu granulierenden Dispersion.

Ein solches Pulver kann entweder durch Trocknung der Dispersion in einem Sprühturm oder aber durch Mischung des Wirkstoffes mit den Formulierungsmitteln und anschließender Trockenvermahlung erhalten werden. Beide Maßnahmen sind aufwendig und kostspielig, da sie zusätzliche Apparaturen erfordern.

Es wurde nun gefunden, daß überraschenderweise Wirkstoff-Dispersionen in Gegenstrom-Granulierungsanlagen direkt granuliert werden können, ohne sie zunächst durch Trocknung und Mahlung in ein feines Pulver überführen zu müssen, wenn man den Granulierprozeß zu Beginn in einer durch bestimmte Parameter festgelegten Anfahrweise durchführt. Das Verfahren kann unter anderem mit Hilfe der oben für das Granulieren von Pulvern verwendbaren Gegenstrom-Granulieranlagen durchgeführt werden.

Gegenstand der Erfindung ist ein Verfahren zur Herstellung von wasserdispergierbaren Granulaten aus wäßrigen Dispersionen oder Lösungen von Feststoffen, die gegebenenfalls noch Formulierungshilfsmittel enthalten, dadurch gekennzeichnet, daß man die wäßrige Dispersion oder Lösung nach dem Gegenstromprinzip in den Gasstrom einer Wirbelkammer sprüht und verwirbeln läßt, wobei man in einer Anfahrphase die Granulatbildung mit 10 bis 60% des maximalen Gasstroms und nur bis zu 30% der maximalen Einspeisungsrate an Dispersion bzw. Lösung beginnt und in der Folge die Einspeisungsrate und den Gasstrom bis zu den Maximalwerten der Einspeisungsrate und des Gasstroms erhöht und in der Hauptphase bei maximalem Gasstrom und maximaler Einspeisungsrate die Granulatbildung fortsetzt.

Insbesondere ist es günstig, den Granulierungsvorgang bei leerer Wirbelkammer (d.h. ohne Vorlage der wäßrigen Dispersion oder Lösung) mit 40 bis 50% des maximalen Gasstroms und 5 bis 15% der maximalen Einspeisungsrate der Dispersion bzw. Lösung zu beginnen.

Als Gase eignen sich solche, die unter den Verfahrensbedingungen inert sind.

Die Gaseingangstemperatur wird während des gesamten Prozeßes vorzugsweise auf einem gewünschten Wert etwa konstant gehalten. Die Gaseingangstemperatur ist vorzugsweise im Bereich von 90°C bis 180°C, insbesondere 120 bis 150°C.

Die optimale Arbeitsweise in der Anfahrphase hinsichtlich Höhe und Temperatur des Gasstroms, Temperatur des Granulats und Einspeisungsrate der Dispersion bzw. Lösung läßt sich im Einzelfall leicht ermitteln, beispielsweise durch Anwendung einer faktoriellen Versuchsplanung.

Für das erfindungsgemäße Verfahren eignen sich Gegenstrom-Anlagen, die ansonsten für die Herstellung von Granulaten aus pulverförmigen Feststoffen vorgesehen sind. Die üblichen Anlagen für Pulvergranulierung enthalten in der Regel eine Wirbelkammer, in die durch einen Siebboden ein Gasstrom (meist trockene, aufgeheizte Luft, Stickstoff, Kohlendioxid oder Gemische davon) eintritt und von oben (entgegen dem Gasstrom) über ein Düse Kleberlösung auf das in der Wirbelkammer vorgelegte Pulver gesprüht wird. Im erfindungsgemäßen Fall wird jedoch kein Pulver vorgelegt, sondern über die erwähnte Düse anstelle einer Kleberlösung die Dispersion oder Lösung des zu granulierenden Feststoffs in die Wirbelkammer eingesprüht. Als Düsen können erfindungsgemäß unterschiedlichste Düsen verwendet werden, vorzugsweise Ein- oder Zweistoffdüsen.

Die Granulier-Anlagen enthalten in der Regel noch ein Hauptfilter, das oberhalb der erwähnten Düse angebracht ist und die vom Gasstrom mitgerissenen feinteiligen Granulate oder Stäube abfängt. Das Hauptfilter besteht vorzugsweise aus zwei parallelen Filtern, die wechselseitig in kurzer Zeitfolge abgerüttelt werden, damit abgefangene feinteilige Granulate und Stäube wieder zurück in die Wirbelkammer fallen.

Für die Durchführung des erfindungsgemäßen Verfahrens mit Hilfe der Granulier-Anlagen sollte die Einspeisungsrate in der Anfahrphase auf die Trocknungseigenschaften des Granulats abgestimmt werden. In einer bevorzugten Verfahrensweise wird in der Anfahrphase die Einspeisungsrate weitgehend simultan mit dem Gasstrom so erhöht, daß die Temperatur t des entstehenden Granulats in dem Bereich von $(t_m + 20°C)$ bis $(t_m - 20°C)$, insbesondere $(t_m + 5°C)$ bis $(t_m - 5°C)$ bleibt, wobei $t_m$ der Mittelwert der Temperatur in °C ist. Beispielsweise kann die Einspeisungsrate der Dispersion in der Anfahrphase taktweise oder kontinuierlich erhöht werden, wobei die maximale Einspeisungsrate vorzugsweise nach 10 bis 50 Min., insbesondere 20 bis 35 Minuten erreicht wird. Bei taktweiser Zudosierung wird die Einspeisungsrate beispielsweise im 0,1- bis 4-Minuten-Takt um 1 bis 5% der maximalen Einspeisungsrate erhöht. Die optimale Steigerung der Einspeisungsrate ist im Einzelfall von der Rezeptur und den Trocknungseigenschaften des Granulates abhängig.

Die gewünschte Produkttemperatur wird zweckmäßig durch simultane Steigerung des Gasstroms weitgehend konstant gehalten. Nach Erreichen des maximalen Gasstroms wird dieser nun gleichfalls etwa konstant gehalten und die Produkttemperatur bis zur maximalen Kammerfüllung durch die Zudosierung der Dispersion geregelt. Nach beendeter Einsprühung wird die Abrüttelung des Hauptfilters abgestellt und das erhaltene Granulat in der Regel durch anhaltenden Gasstrom bei gestoppter Einspeisung an Dispersion bzw. Lösung nachgetrocknet.

Nach Abfüllung des Produktes wird der im Hauptfilter gesammelte Staub abgerüttelt und steht damit für den nächsten Ansatz zur Verfügung. Die Menge dieses Staubes ist rezepturabhängig und kann beim Folgeansatz zur Beschleunigung der Steigerungsrate und damit zur Verkürzung des Anfahrprogrammes genutzt werden.

Das hier beschriebene Verfahren kann vorteilhaft zur Granulierung von Wirkstoff-Dispersionen und -Lösungen angewandt werden. Vorzugsweise haben die Dispersionen bzw. Lösungen einen Feststoffgehalt von 20 bis 70 Gew.-%, inbesondere 35 bis 60 Gew.-%.

Das beschriebene Verfahren kann zur Granulierung solcher Stoffe eingesetzt werden, von denen eine wäßrige Dispersion oder eine wäßrige Lösung hergestellt werden kann. Bevorzugt sind dies in Wasser, gegebenenfalls in Gegenwart von geeigneten Dispergatoren, dispergierbare Feststoffe.

Bei Verwendung einer Dispersion gilt nicht die übliche Einschränkung, wonach nur Stoffe vermahlen werden können, die einen Schmelzpunkt von mehr als 70°C haben, da im vorliegenden Fall die Dispersion nur als Zwischenprodukt eingesetzt wird und daher während der Herstellung und Lagerung gekühlt werden kann.

Stoffe, die die erforderlichen physikalisch-chemischen Eigenschaften aufweisen und in dem hier beschriebenen Verfahren als wasserdispergierbare Granulate formuliert werden können, sind beispielsweise Feststoffe aus der Gruppe der organischen und anorganischen Pflanzenschutz- und Schädlingsbekämpfungsmittel, Pigmente, Futtermittel u.a.

Von besonderem Interesse ist das Verfahren zur Herstellung von Granulaten mit Wirkstoffen aus der Gruppe der Pestizide, insbesondere Herbizide, Insektizide oder Fungizide. Geeignete Wirkstoffe sind beispielsweise herbizide Harnstoffderivate wie z. B. Linuron, Monolinuron, Isoproturon, Diuron oder substituierte Phenoxypropionsäureester wie z. B. Fenoxaprop-ethyl, Diclofop-methyl, Totalherbizide wie Glufosinate-ammonium oder Glyphosate, oder Insektizide aus der Gruppe der Pyrethroide wie z. B. Deltamethrin oder chlorierte bicyclische Verbindungen wie Endosulfan oder Fungizide aus der Gruppe der Triphenylzinnverbindungen wie z. B. Fentinhydroxid, Fentinazetat oder Benzimidazol-Derivate wie Carbendazim oder Dithiocarbamate wie Maneb oder Mancozeb sowie auch Kombinationen aus den Triphenylzinnverbindungen oder den Benzimidazol-Derivaten mit den Dithiocarbamaten. Diese Verbindungen und eine Reihe von Analogen sind in Ch. R. Worthing, S. B. Walker "The Pesticide Manual, British Crop Protection Council" beschrieben.

Die Dispersion oder Lösung des zu granulierenden Feststoffs enthält meist noch weitere feste oder flüssige Stoffe als Hilfsmittel, die entweder für anwendungstechnische Eigenschaften der Stoffe bzw. Wirkstoffe unerläßlich sind und/oder die Bildung der Granulate fördern. Beispielsweise können die Dispersionen oder Lösungen der Pestizide übliche Formulierhilfsmittel enthalten, die für die anwendungstechnischen Eigenschaften der Pestizide und deren optimale biologische Wirkung und des wasserdispergierbaren Granulates erforderlich sind, wie z. B. Netz- und Dispergiermittel, Penetrationsförderer, Kleb- und Haftmittel, Stabilisatoren usw..

Geeignete Netz- und Dispergiermittel sind beispielsweise anion- oder kationaktive, amphoterische und nichtionische oberflächenaktive Substanzen, insbesondere übliche anionische Dispergiermittel, wie das Na-Salz der Sulfosäure aus m-Kresol + Formaldehyd + Na-Sulfit (Dispergiermittel 1494®), Natrium-Oleoylmethyltaurid (®Arkopon T), methoxyligninsulfonsaures Natrium (®Vanisperse CB), ligninsulfonsaures Natrium (®-Borresperse 3 A), Natriummethylnaphthalin-Sulfonat (®Supragil MNS 90) 3-Kern-nonylphenolnovolak-18EO-sulfobernsteinsäurehalbester-natriumsalz (Dispergiermittel 1728®, 18EO = ethoxyliert mit 18 Mol/Mol Ethylenoxid), Isodecylsulfobernsteinsäurehalbester-natriumsalz.

Natriumsalz einer Dinaphthylmethan-disulfonsäure (®Dispersogen A, ®Tamol NNO), Natriumsalz einer Sulfosäure aus Kresol + Formaldehyd + Na-Sulfit + Oxynaphthalinsulfosäure (Dispergiermittel SS®), Natriumsalz der Dibutylnaphthalinsulfonsäure, Natriumpolycarboxylat (®Sopropon T 36), Kaliumpolycarboxylat (®Dispersant DG), Natriumphenylsulfonat (®Dispersant GN), Natriumalkylnaphthalinsulfonat (®Supragil WP), Natriumnaphthalinsulfonat, kondensiert (®Supragil NS 90), Na- bzw. K-Salz eines carboxylierten Copolymeren in Kombination mit anionischem Dispergiermittel (®Geropon SC 211 bzw. 213, Rhône Poulenc) sowie Calcium- oder Natrium-ligninsulfonate verschiedenster Herkunft.

Weiterhin können die Dispersionen oder Lösungen Kleber, wie beispielsweise Stärkesirup, Dextrose, verschiedene Cellulose-Typen, z. B. Methyl- oder Carboxymethylcellulose (z. B. ®Tylose-Marken), Polethylenglykol-Marken, teilverseiftes Polyvinylacetat (®Mowiol-Typen, z. B. 3/83), Polyvinylpyrrolidon (®Luviskol-Typen, z. B. ®Luviskol K 30 enthalten.

Darüber hinaus können die Granulate Inertmaterialien wie $SiO_2$, Kreide, Stärke und Kaolinite, Bindemittel wie Polyvinylpyrrolidon, Saccharid und Polyvinylalkohol, Entschäumer wie Trialkylphosphate oder Mittel, die das Aufplatzen der Granulatkörner in Wasser begünstigen, wie Pentanatriumtriphosphat, enthalten.

Die Wirkstoffgehalte bei den erfindungsgemäßen Granulaten betragen 1 bis 95 Gew.-%, inbesondere 40 bis 90 Gew.-%.

## Beispiele

### A) Allgemeine Verfahrensbeschreibung (siehe anliegende Abbildung)

In einer Vorlage (1) wird die zu versprühende Dispersion oder Lösung vorgelegt. Die Anlage wird nun mit Stickstoff inertisiert. Danach wird der Trockengaskreislauf mit dem Ventilator (2) in Gang gesetzt. Dabei wird das Trockengas in dem Erhitzer (3) auf den gewünschten Wert erhitzt und nach dem Durchströmen der Wirbelkammer (4) im Kondensator (5) auf eine gewünschte Temperatur abgekühlt. Beide Temperaturen sind über den gesamten Prozeß konstant. Die Menge des im Kreislauf verwendeten Gases kann über eine Gasklappe (6) eingestellt werden. Wenn die Temperatur in der leeren Wirbelkammer den gewünschten Wert erreicht hat, wird durch Anstellen des Kompressors (7) und der Pumpe (8) die Düse (9) (Zweistoffdüse) in Betrieb genommen. Die Düse erhält einen Stickstoffstrom, der die Versprühung der Dispersion oder Lösung unterstützt und der auf den Trockengasstrom abgestimmt ist. Man beginnt zunächst mit einer kleinen Flüssigkeitsmenge und steigert diese stetig nach einem bestimmten Anfahrprogramm. Die Trockengasmenge wird dabei in der Weise gesteigert, daß die Produkttemperatur bei einem gewünschten Wert konstant gehalten wird. Das Hauptfilter (10) besteht aus zwei oder mehreren Teilfiltern, die wechselseitig in kurzer Zeitfolge durch Öffnen und Schließen der entsprechenden Absperrklappen (12) vom Gasstrom durchströmt bzw. nicht durchströmt werden und jeweils bei unterbrochenem Gasstrom mit Hilfe des Antriebs (11) abgerüttelt werden, damit der gebildete Staub wieder zurück in die Wirbelkammer fällt.

Wenn die maximale Trockengasmenge erreicht ist, geht der Prozeß in ein konstantes Hauptprogramm über, bei dem bei der gewünschten Produkttemperatur mit möglichst hoher Leistung gefahren wird. Das Wasser aus der Dispersion oder Lösung wird mit Hilfe des Kondensators (5) über das Kondensatsammelgefäß (5a) ausgeschleust und kann anschließend für den Ansatz neuer Lösung oder Dispersion eingesetzt und damit im Verfahren wiederverwendet werden. Nach Erreichen maximaler Füllung der Wirbelkammer wird die Pumpe, der Kompressor und die Abrüttelung abgestellt. Es folgt eine kurze Nachtrocknungs- und Windsicht-Phase. Danach werden der Ventilator und die übrigen Aggregate abgestellt. Nach Abfüllung des Granulates kann ein neuer Granuliervorgang in beschriebener Weise begonnen werden. Die Anlage enthält in der Regel noch Anschlüsse und Regler für die Zuführung und Abführung von Stickstoff sowie Druckregler.

Außerdem kann die Anlage noch weitere Filter zum Abfangen feinster Stäube enthalten.

## B) Testmethoden

Zur Beurteilung der **spontanen Dispergierfähigkeit** der Granulatformulierung in Wasser wurde eine Bewertungsskala von 1 bis 4 zugrunde gelegt:

1 g des Granulates wird in einen mit standardisiertem Wasser (30°C , 342 ppm Wasserhärte) gefüllten 1-Liter-Meßzylinder gegeben. Nach 1 Minute wird der Meßzylinder langsam um 180° gedreht und wieder in die Ausgangslage zurückgebracht. Dieser Vorgang wird dreimal wiederholt.

**Bewertungsskala:**

1 = Alle Granulatkörner sind dispergiert.

Falls nach dem ersten Versuch nicht dispergierte Granulatkörner vorhanden sind, wird 2 Min. nach Versuchsbeginn nochmals 3mal wie beschrieben umgeschüttelt und das Ergebnis wie folgt bewertet:

2 = Das Granulat ist nun vollständig dispergiert.

3 = Reste des Granulats sind nicht dispergiert.

4 = Das Granulat ist zum überwiegenden Teil nicht dispergiert.

Die **Schwebefähigkeit** wurde als diejenige Menge des Präparates (Gew.-%) angegeben, die sich nach Ablauf einer Sedimentationszeit von 30 Minuten in den oberen neunzehntel Volumenteilen einer Suspension befindet (siehe CIPAC-Handbook Vol. 1 (1970) S. 861).

Als **Naßsiebrückstand** wird die Substanzmenge bezeichnet, die nach 10 Min. Spülen mit einer definierten Wassermenge auf einem Sieb von 250 μm bzw. 71 μm zurückbleibt. Eine Beschreibung der Methode ist bei "Specification for pesticides used in public health", WHO-Genf, S. 281 (1973) gegeben.

## C) Ausführungsbeispiele

In den folgenden Beispielen sind Prozente Gewichtsprozente, soweit nichts anderes angegeben ist.

### Beispiel 1

**Herstellung eines wasserdispergierbaren Granulats mit Isoproturon**

In der unter A) beschriebenen Wirbelbettgranulieranlage wurden 30,5 kg einer 42,4 %igen wäßrigen Dispersion von N-(4-Isopropylphenyl )-N′,N′-dimethylharnstoff (Isoproturon) und üblichen Formulierungshilfsstoffen mit insgesamt 53 % Feststoffanteilen vorgelegt und zunächst alle konstanten Parameter wie folgt eingestellt:

Trockengastemperatur:      150°C

Kondensatortemperatur:     33°C

Nachdem in der Wirbelkammer eine Temperatur von 50°C erreicht war, wurde mit einer Trockengasmenge von 250 m³/h und einer Dispersionseinspeisung von 50 g/Min begonnen. Die Einspeisungsrate an Dispersion über die Düse (9) (s. Abb.) wurde während der Anfahrphase nach jeder Minute um 25 g/Min. erhöht. Der über die Gasklappe geregelte Strom an trockenem Stickstoff wurde simultan erhöht, so daß die Produkttemperatur konstant bei 50°C blieb.

Bei einem maximalen Gasstrom von 600 m³/h und einer Einspeisungsrate von 710 g/Min. wurde die Granulierung fertiggestellt.

Im Anschluß an die Nachtrocknung und Windsichtung wurde das Granulat der Wirbelkammer entnommen.

```
Ausbeute          : 16 kg Granulat mit 80,5 % Wirksubstanz
mittlere Korngröße : 0,73 mm
spontane Disper-
gierfähigkeit     : 1
Naßsiebrückstände : auf 0,25 mm < 0,01 %;
                    auf 0,071 mm < 0,01 %
Schwebefähigkeit  : 99 %
Feuchtigkeitsgehalt: 0,5 %
```

**Beispiel 2**

**Herstellung eines wasserdispergierbaren Granulats mit Triphenylzinnhydroxid (TPTH)**

In der unter A) beschriebenen Wirbelbettgranulieranlage wurden 28 kg einer 43 %igen wäßrigen TPTH-Dispersion mit 53,7 Feststoffanteilen vorgelegt. Zunächst wurden alle konstanten Parameter wie folgt eingestellt:

Trockengastemperatur:     120°C
Kondensatortemperatur:     33°C

Nachdem in der Wirbelkammer eine Temperatur von 55°C erreicht war, wurde analog Beispiel 1 die Granulatbildung mit einem Trockengasstrom von 200 m³/h und einer Einspeisungsrate an Dispersion von 25 g/Min begonnen.

Nach jeweils 1,5 Min. wurde die Einspeisungsrate um 25 g/Min. erhöht. Die Trockengasmenge wurde simultan so erhöht, daß die Temperatur des entstehenden Granulats (Produkttemperatur) bei 50°C praktisch konstant blieb.

Bei einem Trockengasstrom von 600 m³/h und einer Einspeisungsrate von 400 g/Min. wurde die Granulierung fertiggestellt.

Im Anschluß an die Nachtrocknung und Windsichtung wurde das Granulat aus der Wirbelkammer (4) abgefüllt.

```
Ausbeute          : 15 kg Granulat mit 80,3 % Wirksubstanz
mittlere Korngröße : 0,410 mm
spontane Disper-
gierfähigkeit     : 1
Naßsiebrückstände : auf 0,25 mm < 0,01 %;
                    auf 0,071 mm < 0,1 %
Schwebefähigkeit  : 88 %
Feuchtigkeitsgehalt: 0,7 %
```

**Beispiel 3**

**Herstellung eines wasserdispergierbaren Granulats mit Glufosinate-ammonium**

In der oben beschriebenen Wirbelbettgranulieranlage wurden 34,5 kg einer 7,6 %igen wäßrigen Lösung von Glufosinate-ammonium und Hilfsstoffen mit 38 % Feststoffanteil vorgelegt. Zunächst wurden folgende Parameter eingestellt:
Trockengastemperatur: 150°C
Kondensatortemperatur: 33°C

Nachdem in der Wirbelkammer eine Temperatur von 95°C erreicht war, wurde die Granulatbildung bei einem Trockengasstrom von 350 m³/h und einer Einspeisungsrate von 25 g Wirkstofflösung pro Minute begonnen.

Die Einspeisungsrate wurde nach jeweils 4 Minuten um 25 g/Min. erhöht. Der Trockengasstrom wurde simultan so erhöht, daß eine praktisch konstante Produkttemperatur von etwa 90°C eingehalten werden konnte.

Bei einem Trockengasstrom von 600 m³/h und einer Einspeisungsrate von 280 g/Min. wurde die Granulierung beendet.

Im Anschluß an die Nachtrocknung und Windsichtung wurde das Granulat abgefüllt.

```
Ausbeute             : 13 kg Granulat mit 20,7 % Wirkstoff
mittlere Korngröße   : 1,1 mm
spontane Disper-
gierfähigkeit        : 2
Naßsiebrückstände    : auf 0,25 mm < 0,01 %;
                       auf 0,071 mm < 0,01 %
Schwebefähigkeit     : klare Lösung
Feuchtigkeitsgehalt: 1,5 %
```

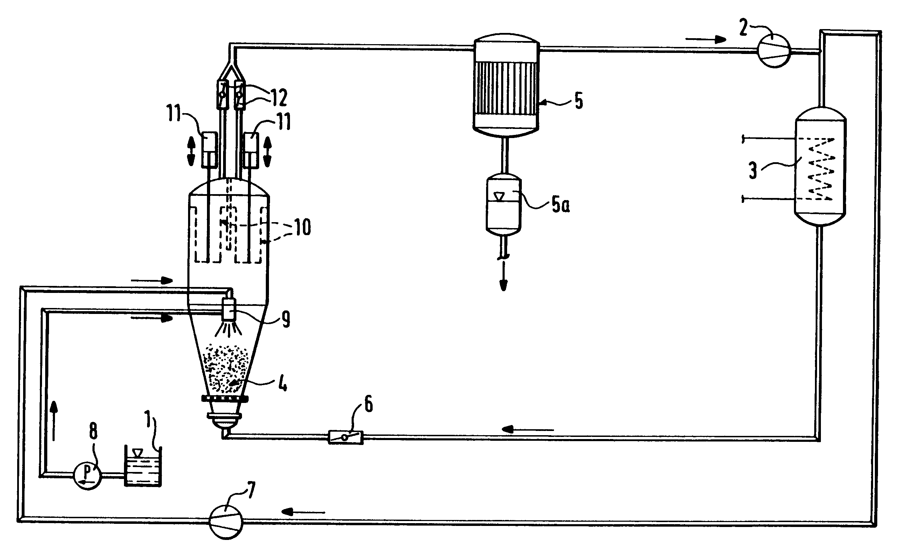

**Patentansprüche**

1. Verfahren zur Herstellung von wasserdispergierbaren Granulaten aus wäßrigen Dispersionen oder Lösungen von Feststoffen, die gegebenenfalls noch Formulierungshilfsmittel enthalten, dadurch gekennzeichnet, daß man die wäßrige Dispersion oder Lösung nach dem Gegenstromprinzip in den Gasstrom einer Wirbelkammer sprüht und verwirbeln läßt, wobei man in einer Anfahrphase die Granulatbildung mit 10 bis 60% des maximalen Gasstroms und nur bis zu 30% der maximalen Einspeisungsrate an Dispersion bzw. Lösung beginnt und in der Folge die Einspeisungsrate und den Gasstrom bis zu den Maximalwerten der Einspeisungsrate und des Gasstroms erhöht und in der Hauptphase bei maximalem Gasstrom und maximaler Einspeisungsrate die Granulatbildung fortsetzt.

2. Verfahren nach Anspruch 1, dadurch gekennzeichnet, daß man die Granulatbildung in der Anfahrphase mit 40 bis 50 % des maximalen Gasstroms und 5 bis 15 % der maximalen Einspeisungsrate an Dispersion bzw. Lösung beginnt.

3. Verfahren nach Anspruch 1 oder 2, dadurch gekennzeichnet, daß der Gasstrom bei Eingang in die Wirbelkammer eine Temperatur im Bereich von 90 bis 180°C, insbesondere 120 bis 150°C, aufweist.

4. Verfahren nach einem oder mehreren der Ansprüche 1 bis 3, dadurch gekennzeichnet, daß der Gasstrom vor Eingang in die Wirbelkammer während des Verfahrens konstante Temperatur aufweist.

5. Verfahren nach einem oder mehreren der Ansprüche 1 bis 4, dadurch gekennzeichnet, daß in der Anfahrphase die Einspeisungsrate weitgehend simultan mit dem Gasstrom so erhöht wird, daß die Temperatur t des entstehenden Einspoisungsrate weitgehend simultan mit dem Gasstrom so erhöht wird, daß die Temperatur t des entstehenden Granulats in dem Bereich von ($t_m$ + 20°C) bis ($t_m$ - 20°C) liegt, wobei $t_m$ der Mittelwert der Temperatur in °C ist.

6. Verfahren nach einem oder mehreren der Ansprüche 1 bis 5, dadurch gekennzeichnet, daß die Einspeisungsrate in der Anfahrphase im 0,1- bis 4-Minuten-Takt um 1 bis 5% der maximalen Einspeisungsrate pro Takt erhöht wird oder daß die Einspeisungsrate in der Anfahrphase kontinuierlich erhöht wird.

7. Verfahren nach einem oder mehreren der Ansprüche 1 bis 6, dadurch gekennzeichnet, daß durch den Gasstrom mitgerissene feine Granulate und Stäube durch ein nachgeschaltetes Filter aufgefangen und das Filter während des Verfahrens ständig oder in Zeitabständen gerüttelt wird und die aufgefangenen Granulate bzw. Stäube zurück in die Wirbelkammer fallen oder dahin befördert werden.

8. Verfahren nach einem oder mehreren der Ansprüche 1 bis 7, dadurch gekennzeichnet, daß die in der Dispersion bzw. Lösung dispergierten bzw. gelösten Feststoffe Wirkstoffe aus der Gruppe der Pestizide, gegebenenfalls in Gegenwart von für Pestizide und Granulate üblichen Formulierungshilfsmitteln, sind.

9. Verfahren nach einem oder mehreren der Ansprüche 1 bis 8, dadurch gekennzeichnet, daß die Dispersion bzw. Lösung einen oder mehrere für die Granulatbildung förderliche Kleb-, Haft-, Netz- und Dispergiermittel und Stabilisatoren enthalten.

10. Verwendung eines nach dem Verfahren nach Anspruch 8 oder 9 hergestellten Granulats als Pflanzenschutz- oder Schädlingsbekämpfungsmittel.


## Claims

1. A process for the preparation of water-dispersible granules from aqueous dispersions or solutions of solids, also containing, if appropriate, formulation auxiliaries, which comprises spraying the aqueous dispersion or solution by the counter-current principle into the gas stream of a fluidizing chamber and causing it to fluidize, starting the formation of granules in a start-up phase at 10 to 60 % of the maximum gas flow and at only up to 30 % of the maximum feed rate of dispersion or solution, and subsequently increasing the feed rate and the gas flow up to the maximum values for the feed rate and the gas flow, and, in the main phase, continuing the formation of granules at maximum gas flow and maximum feed rate.

2. The process as claimed in claim 1, wherein the formation of granules is begun in the start-up phase at 40 to 50 % of the maximum gas flow and at 5 to 15 % of the maximum feed rate of dispersion or solution.

3. The process as claimed in claim 1 or 2, wherein the gas stream at the entry into the fluidizing chamber has a temperature in the range from 90 to 180°C, in particular 120 to 150°C.

4. The process as claimed in one or more of claims 1 to 3, wherein the gas stream before entering into the fluidizing chamber has a constant temperature during the process.

5. The process as claimed in one or more of claims 1 to 4, wherein the feed rate in the start-up phase is increased substantially simultaneously with the gas flow at such a rate that the temperature t of the granules formed is in the range from ($t_m$ + 20°C) to ($t_m$ - 20°C), $t_m$ being the average value of the temperature in °C.

6. The process as claimed in one or more of claims 1 to 5, wherein the feed rate in the start-up phase is increased, in a 0.1 minute to 4 minute cycle, by 1 to 5 % of the maximum feed rate, per cycle, or the feed rate in the start-up phase is increased continuously.

7. The process as claimed in one or more of claims 1 to 6, wherein fine granules and dusts carried over by the gas stream are trapped by a filter placed downstream, and the filter is shaken continuously or at intervals of time during the process and the trapped granules or dusts fall back into the fluidizing chamber or are conveyed thither.

8. The process as claimed in one or more of claims 1 to 7, wherein the solids dispersed or dissolved in the dispersion or solution, respectively, are active compounds belonging to the group comprising pesticides, if appropriate in the presence of formulation auxiliaries which are customary for pesticides and granules.

**9.** The process as claimed in one or more of claims 1 to 8, wherein the dispersion or solution contain one or more adhesives, tackifiers, wetting and dispersing agents and stabilizers which are helpful for the formation of granules.

**10.** The use of granules prepared by the process as claimed in claim 8 as plant protection agents or pest control agents.

**Revendications**

**1.** Procédé pour produire des granulés dispersibles dans l'eau à partir de dispersions ou de solutions aqueuses de matières solides contenant éventuellement encore des auxiliaires de formulation, caractérisé en ce qu'on procède à une pulvérisation et à une fluidisation de la dispersion ou de la solution aqueuse selon le principe du contre-courant, en l'envoyant dans le courant gazeux d'une chambre de fluidisation, la formation des granulés, dans la phase initiale, commençant avec 10 à 60 % du débit gazeux maximal et seulement jusqu'à 30 % du débit d'introduction maximal de la dispersion ou de la solution, le débit d'introduction et le débit gazeux augmentant ensuite jusqu'aux valeurs maximales respectivement du débit d'introduction et du débit gazeux, la formation des granulés se poursuivant au cours de la phase principale, le débit gazeux et le débit d'introduction étant maximaux.

**2.** Procédé selon la revendication 1, caractérisé en ce qu'on commence la production des granulés dans la phase initiale à 40-50 % du débit gazeux maximal et à 5-15 % du débit maximal d'introduction de la dispersion ou de la solution.

**3.** Procédé selon la revendication 1 ou 2, caractérisé en ce que le courant gazeux présente lors de son entrée dans la chambre de fluidisation une température de 90 à 180 et en particulier de 120 à 150°C.

**4.** Procédé selon l'une ou plusieurs des revendications 1 à 3, caractérisé en ce que le courant gazeux présente avant de pénétrer dans la chambre de fluidisation une température constante tout au long du procédé.

**5.** Procédé selon l'une ou plusieurs des revendications 1 à 4, caractérisé en ce que dans la phase initiale le débit d'introduction est essentiellement élevé en même temps que le débit gazeux de façon que la température t du granulé obtenu s'écarte de moins de 20°C, dans un sens et dans l'autre, de la température $t_m$, qui est la valeur moyenne de la température en °C.

**6.** Procédé selon l'une ou plusieurs des revendications 1 à 5, caractérisé en ce que le débit d'introduction est, au cours de la phase initiale, augmenté de 1 à 5 % du débit maximal d'introduction toutes les 0,1 à 4 minutes, ou encore que le débit d'introduction augmente en continu dans la phase initiale.

**7.** Procédé selon l'une ou plusieurs des revendications 1 à 6, caractérisé en ce que les granulés fins et les poussières fines entraînés par le courant gazeux sont captés par un filtre monté en aval, et que le filtre est, pendant l'opération, secoué d'une manière continue ou périodique, les granulés ou poussières captés retombant dans la chambre de fluidisation ou y étant refoulés.

**8.** Procédé selon l'une ou plusieurs des revendications 1 à 7, caractérisé en ce que les matières solides dispersées ou dissoutes dans la dispersion ou dans la solution sont des matières actives du groupe des pesticides, éventuellement en présence d'auxiliaires de formulation usuels pour les pesticides et granulés.

**9.** Procédé selon l'une ou plusieurs des revendications 1 à 8, caractérisé en ce que la dispersion ou la solution contient un ou plusieurs adhésifs, mouillants, dispersants et stabilisants favorisant la formation des granulés.

**10.** Utilisation d'un granulé préparé par le procédé selon les revendications 8 ou 9 en tant qu'agent phytosanitaire ou pesticide.

EP 0 388 867 B1